# EUROPEAN PATENT SPECIFICATION

(11) **EP 3 331 689 B1**
(45) Date of publication and mention of the grant of the patent: **09.06.2021**
(21) Application number: 16745076.6
(22) Date of filing: 20.07.2016
(51) Int. Cl.: B29C 70/08, B29C 70/54

(54) **MOULDING MATERIALS WITH IMPROVED SURFACE FINISH**
FORMMATERIALIEN MIT VERBESSERTER OBERFLÄCHENBESCHAFFENHEIT
MATÉRIAUX DE MOULAGE À FINITION DE SURFACE AMÉLIORÉE

(30) Priority: 05.08.2015 GB 201513870
(43) Date of publication of application: 13.06.2018
(73) Proprietor: Hexcel Composites Limited, Duxford Cambridgeshire CB22 4QB (GB)
(72) Inventor: WHITER, Mark, Duxford Cambridgeshire CB22 4QB (GB); RHODES, Michael, Duxford Cambridgeshire CB22 4QB (GB)
(74) Representative: TLIP Limited
(86) International application number: PCT/EP2016/067283
(87) International publication number: WO 2017/021147

(56) References cited:
- WO-A1-02/28624

## Description

The present invention relates to fibre reinforced materials comprising fibres and thermosetting resins and in particular to materials that are produced by stacking layers comprising reinforcing fibre and a curable resin and subsequently curing the resin to provide an integral laminar structure of several fibre reinforcing layers encapsulated by the cured resin. Such laminar structures are strong and light-weight and are well known and find many uses in industrial applications such as automotive, aerospace and marine applications and also in wind turbine structures such as the shells used for turbine blade production, the spars and the root ends of the spars. They are also used for sporting goods such as for skis, skate boards, surf boards, windsurfers and the like. The invention is particularly concerned with improving the surface finish of the final cured article. In particular to produce articles having what is known in the automobile industry as a Class A finish.

For some applications in, for example, the automobile and aerospace industry, it is desirable to produce articles (such as engine hoods, body panels, spoilers, etc.), which not only have a consistent quality but which are also light-weight, and have excellent mechanical properties and a smooth aesthetically pleasing surface finish.

A common moulding material for these applications consists of a sheet moulding compound (SMC). This material is essentially a prepreg comprising fibrous reinforcement material layers which are preimpregnated with a resin system. The resin system comprises a resin intermixed with a light weight filler to lower the density of the material. The addition of the filler also reduces the cost of the material. The SMC material is formed by applying fibrous reinforcement material layers onto a resin layer which is then pressed between impregnation rollers to drive the resin system into the reinforcement layers to form the prepreg SMC material.

In the production of the prepregs used in the invention, the impregnation of a fibrous material with the liquid resin can introduce some air into the prepreg assembly of the fibrous layer and the resin during impregnation. In traditional mouldings without the support structure and surface venting structure used in the present invention, air which is trapped during the manufacture of the prepreg is difficult to remove once the prepreg is laid up to form the moulding and the moulding is processed whereby the thermosetting resin begins to cure.

Air also tends to be captured between layers of prepregs due to their tacky surfaces. It has been customary to process the lay-up of prepregs under vacuum (usually in a vacuum bag or autoclave) to remove air from laminate stacks. Generally, it has not been possible to completely remove trapped interlaminar air and intralaminar air (air within a single layer of prepreg) from conventional prepregs and to manufacture laminates which have uniform properties across the length and breadth of the laminate.

The SMC material can be readily processed by applying pressure and/or vacuum to harden (cure) the material whilst the material is at a suitable processing temperature. One of the main problems associated with this moulded material is that the surface properties of this material are not ideal. During the processing of the moulding material the material is heated, and the viscosity of the resin is lowered. This can cause the filler, which has been dispersed in the resin and which has a lower density than the resin, to move upward and concentrate on the surface of the moulding material. If this happens then after curing of the material, the surface of the composite material is not smooth and can comprise deformations which can vary from small pin-holes to cracks. These pin-holes and cracks can develop into blisters during the life of the cured material. This may lead to the need for the surface to be repaired by filling and fairing. This is inefficient, expensive and can result in an unsightly surface of the moulding.

It is known to provide removable surface finishing films on the surface of the mouldable materials with the aim of providing a desired surface finish, such as a Class A finish, suitable for subsequent treatment, including painting. However, the provision of such surface finishing films can generate blemishes or pin holes because any entrapped gasses such as air cannot escape during the moulding process and so result in blemishes or pin holes in the moulding. It has been proposed that this may be overcome by the provision of a veil between the surface finishing film and the mould surface, but although this can reduce the blemishes and pin holes in the surface of the moulding, it provides a non-sticky contact between the mould surface and the moulding material, which can result in slippage of the material relative to the mould surface. For example it has been proposed in United Kingdom Patent GB 2369597 which discloses the features of the preamble of claims 1, 10 and 14, that moulding materials having a core layer comprising a resin and a filler may be provided with a reinforcement layer on at least one surface, and the reinforcement layer contains a ventilating structure which allows gasses to pass out of the moulding material during moulding. The system is also structured to prevent the filler from migrating to the surface of the moulding during the moulding process.

It is important that the SMC does not move within the mould during the curing operation, as this can cause surface imperfections and irregularities in the moulding. This must be balanced by the need to remove the cured moulding from the mould without damaging the surface of the moulding.

It is known to apply a removable adhesive to the surface of the moulding material so that a readily removable bond is formed between the moulding material and the surface of the mould, so that there is sufficient adhesion to prevent movement of the moulding material during the moulding process and sufficiently low adhesion to enable ready removal of the moulding from the mould.

It has also been proposed that the surface of the moulding material may be sprayed with a removeable adhesive to increase the tack between the surface of the moulding material and the mould. The spray can be a continuous coating or a series of dots. However the use of such adhesives has been found to result in surface imperfections in the moulding, at least in those areas to which the adhesive has been applied. Additionally, the adhesives are usually applied as a spray, which requires the use of volatile organic solvents, which is undesirable from an environmental aspect.

It has been proposed in WO 02/094564 that a surface material may be provided with a coating comprising a layer of surface material and a resin conducting layer, which allows venting of interlaminar gasses and also provides a retention structure to keep the resin in contact with the mould surface. We have found that such a retention structure can produce surface imperfections in the moulding.

The invention aims to obviate and/or mitigate the above described problems and/or to provide improvements generally.

According to the present invention, there is provided a moulding material, a stack of moulding materials, a cured moulding, the use of a veil, and a moulding process as defined in any of the accompanying claims.

We have found that these problems may be overcome if a surface finishing film with a tacky surface is provided on the reinforcing material, and a veil is provided on the outer surface of the surface finishing film, and the veil is provided with perforations that allow passage of tacky material from the surface finishing film through the veil to provide a light tack between the moulding material and a mould surface.

The fibrous material employed in these materials may be tows or woven or non-woven fabrics, and may be chosen according to the final use and desired properties of the final cured moulding. Examples of fibrous materials that may be used include glass fibre, carbon fibre and Aramid. Similarly the thermosetting resin that is used may depend upon the use to which the laminate is to be put and the properties required. Examples of suitable thermosetting resins include polyurethane resins and epoxy resins. This invention is particularly concerned with systems employing thermosetting liquid epoxy resins.

Moulding materials comprising mixtures of fibrous material and thermosetting resins are sometimes known as prepregs, and can be prepared by impregnating the fibrous material with the resin in liquid form. Some resins are liquid at ambient temperature and impregnation can therefore be achieved at ambient temperature. However, usually it is preferred to heat the resin below its curing temperature in order to reduce its viscosity to aid impregnation of the fibrous material. Other resins which may be used are semisolid or solid at ambient temperature and are melted to enable impregnation of the fibrous material with a liquid resin.

The term prepreg or semipreg is used herein to describe a moulding material or structure in which the fibrous material has been impregnated with the liquid resin to the desired degree and the liquid resin is substantially uncured.

The term interstices is used in this application to define the space or volume which is present between fibres of a fibrous material such as between adjacent tows. The space or volume may be filled with resin when the fibrous material is impregnated, either partly or completely.

The term "veil" is used to describe a thin lightweight porous web or fibrous reinforcement having a weight in the range of from 1 to 80 g/m² (gsm), preferably from 5 to 50 gsm, and more preferably from 15 to 40 gsm, and even more preferably from 20 to 30 gsm and/or or combinations of the aforesaid weight ranges, typically it is fibrous and also it is preferably derived from carbon fibre, glass fibre or aramid.

The term "syntactic film" is used to define a resin matrix film or layer which contains a particulate filler, such as microballoons, glass spheres, talc, silica etc.

Accordingly the present invention provides a moulding material comprising a layer of a fibrous material in a curable resin matrix provided on at least one surface with a surface finishing film comprising tacky resin wherein a veil is provided on the surface of the finishing film remote from the moulding material and perforations are formed in the veil to allow passage of the tacky resin of the surface finishing film through the veil during a moulding operation.

In a further embodiment the invention provides the use of a veil formed with perforations as the surface layer of a moulding material comprising fibrous reinforcement in a matrix of a tacky resin to allow passage of the tacky resin through the veil during a moulding operation.

In a further embodiment the invention provides a curable multilayer moulding material composite comprising a prepreg provided with a support structure on at least one surface thereof and a surface finishing film provided on the surface of the support structure remote or spaced from the prepreg, and a surface venting structure provided on the surface of the finishing film remote or spaced from the support structure, wherein the surface finishing film comprises a tacky resin and the surface venting structure has perforations that allow passage of the tacky resin through the surface venting structure.

In a further embodiment, the surface finishing film comprises a particulate filler. The particulate filler may comprise microballoons, silica, glass spheres, talc and/or a combination of the aforesaid fillers.

In a preferred embodiment, and depending upon the final articles to be produced, the prepreg is coupled with a film such as a syntactic film on the side of the prepreg remote or spaced from the support structure and, again depending upon the nature of the article to be produced, a further prepreg layer can be provided against the back of the syntactic film.

When used, the support structure is preferably a fibrous material that is either not impregnated with resin or is partially impregnated with resin. The support structure provides support for the surface finishing film, and is preferably not fully impregnated, so that it provides gas venting, typically along the axis of the fibres from which it is derived. In this way it allows air or gasses within the prepreg to be vented to the side of the moulding during the moulding and curing operation, rather than passing into the surface finishing film and to the surface of the composite where they cause surface imperfections. It also helps to retain the surface finishing film between the mould surface and prepreg during curing. The use of a veil as the support structure allows the prepreg to be fully impregnated, as the porosity of the veil allows escape of any gasses in the fully impregnated prepreg, and prevents the gasses reaching the surface of the mould, which would produce voids and imperfections in the surface.

The surface finishing film is a curable resin, which may or may not be fibre reinforced. However, it is important that the resin be tacky and a liquid, so that it can flow through the perforations in the veil to provide a removable adhesive bond between the mould surface and the moulding material. The resin from the surface finishing film should remain in contact with the mould surface during moulding and curing of the composite, and the resin of the surface finishing film should not flow into and/or through the support structure into the prepreg, because this would reduce the amount of resin at the mould surface, which would also cause surface imperfections. The tacky resin from the surface finishing film that is against the mould surface prevents the materials moving within the mould.

The combination of the surface venting structure and the removable adhesion to the mould surface provides the desired surface finish to the moulding. The surface venting structure should be provided with perforations to allow passage of tacky resin from the surface finishing film to the surface of the mould so as to adhere the structure to the mould surface. We have found that the moulding of a composite according to the invention provides a moulded article with the desired surface finish, such as the Class A surface finish required for certain automotive and aerospace applications, as is required, for example, in body panels. An example of a useful material for the surface venting structure is a Trinitex veil that has been provided with perforations. The optimum distribution and size of the perforations in the surface venting structure will depend upon the moulding that is to be produced, the thickness of the surface venting structure, the viscosity of the resin in the surface finishing film at the moulding conditions as well as the moulding cycle that is to be used. We have found, however, that the provision of holes of average diameter from 1 mm to 10 mm (preferably from 2 mm to 6 mm), with a spacing of from 1 mm to 50 mm (preferably from 20 mm to 35 mm) is particularly useful.

The syntactic film layer which may be included behind the prepreg layer acts as a cheaper low cost layer between layers of prepreg, and typically consists of a low density micro balloons contained in a resin matrix.

In a further aspect of the invention the thickness ratio of the surface finishing film in relation to the syntactic film is less than 1:2 and greater than 1:6.

In a further embodiment the invention provides a stack of the moulding materials previously described.

The invention further provides a cured moulding comprising a multilayer material composite comprising a cured prepreg attached on one surface to the first surface of a support structure which in turn is attached at its second surface to the first surface of a finishing film which is attached at its second surface to a surface of a perforated venting structure, such as a perforated veil.

The moulding can consist of a plurality of layers of the cured multilayer material.

The invention further provides such a cured moulding provided with a Class A finish.

The thicknesses of the various layers can be varied according to the nature of the article to be produced.

For the escape of the air through the support structure during moulding or curing it is useful that the support structure contains short channels to the lateral edges of the support structure by placing the strands in roughly cross-direction. Preferably the support structure should include parallelograms with side lengths of 10 to 35 mm, wherein the smaller angle of the parallelogram is between 50° and 80°, preferably between 65° and 75°. Therefore the support structure preferably should comprise strands in longitudinal direction, which is the running direction of the sheet, and strands in roughly cross-direction to the running direction of the sheet. With such a construction, during press molding, the air will first advance along the longitudinal strands up to a point, where the longitudinal strand meets a strand in cross-direction, from where the air will escape outwardly along a strand in cross-direction. These strands in cross-direction create a short way outwardly. In this connection, also the angle between the strands in longitudinal direction and the strands in roughly cross-direction is of practical importance.

The degree of impregnation of the resin in a prepreg can be measured by the water pick up test. The water pick up test is conducted as follows. Six strips of prepreg are cut of size 100 (+/-2) mm x 100 (+/-2) mm. Any backing sheet material is removed. The samples are weighed to the nearest 0.001 g (W1). The strips are then located between PTFE backed aluminium plates so that 15 mm of the prepreg strip protrudes from the assembly of PTFE backed plates on one end and the fibre orientation of the prepreg extends along the protruding part of the strip. A clamp is placed on the opposite end of the strip and 5 mm of the protruding part is immersed in water having a temperature of 23°C, relative air humidity of 50% +/- 35%, and at an ambient temperature of 23°C. After 5 minutes of immersion the sample is removed from the water and any exterior water is removed with blotting paper. The sample is then weighed again (W2). The percentage of water uptake WPU(%) is then calculated by averaging the measured weights for the six samples as follows: WPU(%)=[(<W2>-<W1 >)/<W1 >)x100. The WPU(%) is indicative of the Degree of Resin Impregnation (DRI). We prefer that the prepregs used in the present invention have a water pick up in the range of 1 to 5 %, preferably 1 to 3%.

The total moulding material or cured structure of this invention may have a resin impregnation concentration ranging from 20 to 50% by weight, preferably from 30 to 40% by weight and more preferably from 32 to 38% by weight of the material or structure.

A polyethylene or silicone coated release paper may be placed as a protector layer on one or both sides of the uncured moulding material, particularly if it is to be reeled, stored and transported prior to use.

In addition to the water pick up value, the moulding material or structure of the invention may be characterized by its overall resin content and/or its fibre volume.

Resin and fibre content of the uncured moulding materials or structures are determined in accordance with ISO 1 1667 (method A) for moulding materials or structures which contain fibrous material which does not comprise unidirectional carbon. Resin and fibre content of uncured moulding materials or structures which contain unidirectional carbon fibrous material are determined in accordance with DIN EN 2559 A (code A). Resin and fibre content of cured moulding materials or structures which contain carbon fibrous material are determined in accordance with DIN EN 2564 A.

The fibre and resin volume % of a moulding material or structure can be determined from the weight% of fibre and resin by dividing the weight % by the respective density of the resin and fibre.

Typically, the values for the resin content by weight for the uncured composite of the invention are in the ranges of from 15 to 70% by weight of the composite, from 18 to 68% by weight of the composite, from 20 to 65% by weight of the composite, from 25 to 60% by weight of the composite, from 25 to 55% by weight of the composite, from 25 to 50% by weight of the composite, from 25 to 45% by weight of the composite, from 25 to 40% by weight of the composite, from 25 to 35% by weight of the composite, from 25 to 30% by weight of the composite, from 30 to 55% by weight of the composite, from 35 to 50% by weight of the composite and/or combinations of the aforesaid ranges.

Typically, the values for the resin content by volume for the uncured composite of the invention are in the ranges of from 15 to 70% by volume of the composite, from 18 to 68% by volume of the composite, from 20 to 65% by volume of the composite, from 25 to 60% by volume of the composite, from 25 to 55% by volume of the composite, from 25 to 50% by volume of the composite, from 25 to 45% by volume of the composite, from 25 to 40% by volume of the composite, from 25 to 35% by volume of the composite, from 25 to 30% by volume of the composite, from 30 to 55% by volume of the composite, from 35 to 50% by volume of the composite and/or combinations of the aforesaid ranges.

Finally, the values for the resin content by volume for the uncured composite tows of the invention are in the ranges of from 15 to 70% by volume of the composite, from 18 to 68% by volume of the composite, from 20 to 65% by volume of the composite, from 25 to 60% by volume of the composite, from 25 to 55% by volume of the composite, from 25 to 50% by volume of the composite, from 25 to 45% by volume of the composite, from 25 to 40% by volume of the composite, from 25 to 35% by volume of the composite, from 25 to 30% by volume of the composite, from 30 to 55% by volume of the composite, from 35 to 50% by volume of the composite and/or combinations of the aforesaid ranges.

The values for the resin content by weight for the uncured composite tows of the invention are in the ranges of from 15 to 70% by weight of the composite, from 18 to 68% by weight of the composite, from 20 to 65 % by weight of the composite, from 25 to 60% by weight of the composite, from 25 to 55% by weight of the composite, from 25 to 50% by weight of the composite, from 25 to 45% by weight of the composite, from 25 to 40% by weight of the composite, from 25 to 35% by weight of the composite, from 25 to 30% by weight of the composite, from 30 to 55% by weight of the composite, from 35 to 50% by weight of the composite and/or combinations of the aforesaid ranges.

Where tows are employed as the fibrous material in the present invention they may be made up of a plurality of individual filaments. There may be many thousands of individual filaments in a single tow. The tow and the filaments within the tow are generally unidirectional with the individual filaments aligned substantially parallel. In a preferred embodiment the tows within the moulding material or structure of the invention are substantially parallel to each other and extend along the direction of travel employed for the processing of the structure. Typically the number of filaments in a tow can range from 2,500 to 10,000 to 50,000 or greater. Tows of about 25,000 carbon filaments are available from Toray and tows of about 50,000 carbon filaments are available from Zoltek.

Using a veil in which the interior of the tows is at least partially resin free provides an air venting path or structure, so that air that may be present in the tows of the prepreg is not trapped within the structure by the resin and can escape during preparation and consolidation of the composite. The air is able to escape along the length of the tows. Furthermore, the provision of the spaces between the filaments of the tows will allow air trapped during stack formation to escape.

The resins used in the layers of the composites of this invention may be produced from normally available epoxy resins which may contain a hardener and optionally an accelerator. Dicyandiamide is a typical hardener which may be used together with an urea based accelerator. The relative amount of the curing agent and the epoxy resin that should be used will depend upon the reactivity of the resin and the nature and quantity of the fibrous reinforcement in the prepreg. Typically from 0.5 to 10 wt % of the urea based or urea derived curing agent based on the weight of epoxy resin is used.

The cured products produced from the composites of this invention have a high quality surface containing less than 3% by volume of voids, preferably less than 1% by volume of voids, more preferably less than 0.5% by volume and particularly less than 0.1% by volume, more particularly less than 0.07% by volume based on the total volume of the laminate as measured by microscopic analysis of 20 spaced cross sections measuring 30 x 40 mm in cross section (spacing 5 cm) of a cured sample of the laminate. In this measurement the cross sections are polished and analysed under a microscope over a viewing angle of 4.5 to 3.5 mm to determine the surface area of the voids in relation to the total surface area of each cross section of the sample, and these measurements are averaged for the number of cross sections. This method for determining the void fraction is used within the context of this application, although alternative, standardized methods are available such as DIN EN 2564. Also, the maximum size of the voids is assessed in each viewing angle section and this number is averaged over the 20 samples. The average surface area of the voids is taken as the value of the void content by volume. We have found that void fractions or levels as low as no more than 0.06% and 0.01% by volume have been achieved.

The composites of this invention are typically used at a different location from where they are manufactured and they therefore require handleability. It is therefore preferred that they are dry or as dry as possible and have low surface tack. It is therefore preferred to use high viscosity liquid curable resins.

The composite is preferably provided with one or more backing sheets to facilitate handling of the material and/or rolling up of the material. The backing sheet may comprise a polyolefin based material such as polyethylene, polypropylene and/or copolymers thereof. The backing sheet may comprise embossing. This has the advantage of providing the prepreg with an air venting surface structure. The air venting surface structure comprising embossed channels which allow air to escape during processing. This is particularly useful as this prevents interply entrapment as interply air is effectively removed via the air venting surface channels.

In order to produce final laminates with substantially uniform mechanical properties it is important that the structural fibres and the epoxy resin in the prepreg be mixed to provide a substantially homogenous prepreg. This requires uniform distribution of the structural fibres within the prepreg to provide a substantially continuous matrix of the resin surrounding the fibrous tows whilst leaving the interstices within the tows at least partially resin free.

The composites of this invention are intended to be laid-up with other composite materials (e.g. other composites which may also be according to this invention or they may be other composites or prepregs) to produce a curable laminate or stack. The composite is typically produced as a roll and in view of the tacky nature of such materials, a backing sheet is generally provided to enable the roll to be unfurled at the point of use. Thus, preferably the composite according to the invention comprises a backing sheet on an external face.

The prepregs used in this invention are produced by impregnating the fibrous material with the epoxy resin. The viscosity of the resin and the conditions employed for impregnation are selected to enable the desired degree of impregnation. It is preferred that during impregnation the resin has a viscosity of from 0.1 Pa.s to 100 Pa.s, preferably from 6 to 100 Pa.s, more preferably from 18 to 80 Pa.s and even more preferably from 20 to 50 Pa.s. In order to increase the rate of impregnation, the process may be carried out at an elevated temperature so that the viscosity of the resin in reduced. However it must not be so hot for a sufficient length of time that premature curing of the resin occurs. Thus, the impregnation process is preferably carried out at temperatures in the range of from 40°C to 110°C more preferably 60°C to 80°C. It is preferred that the resin content of the prepregs is such that after curing the structure contains from 30 to 40 wt %, preferably 31 to 37 wt % more preferably 32 to 35 wt % of the resin. The relative amount of resin and fibrous reinforcement, the impregnation line speed the viscosity of the resin and the density of the fibrous reinforcement should be correlated to achieve the desired degree of impregnation of the fibrous material and to leave spaces between the individual filaments which are unoccupied by the resin.

The resin can be spread onto the external surface of a roller and coated onto a paper or other backing material to produce a layer of curable resin. The resin composition can then be brought into contact with the multifilament tows for impregnation perhaps by the passage through rollers. The resin may be present on one or two sheets of backing material, which are brought into contact with one or both sides of the fibrous material and consolidated such as by passing them through heated consolidation rollers to cause the desired degree of impregnation. Alternatively, the resin may be applied via a resin bath by conducting the fibrous material through the resin (direct fibre impregnation). The resin may also comprise a solvent which is evaporated following impregnation of the fibrous material.

In the impregnation processes the resin can be maintained in liquid form in a resin bath either being a resin that is liquid at ambient temperature or being molten if it is a resin that is solid or semi-solid at ambient temperature. The liquid resin can then be applied to a backing material employing a doctor blade to produce a resin film on a release layer such as paper or polyethylene film. The fibre tows may then be placed into the resin and optionally a second resin layer may be provided on top of the fibre tows and then consolidated.

In a further embodiment a resin impregnated fibrous layer may be superimposed on a substantially resin free veil of unidirectional tows and the combination pressed together so that the resin from the impregnated layer passes into the resin free layer so that the resin enters between the tows but leaves at least part of the interstices within the tows at least partially resin free.

A backing sheet can be applied either before or after impregnation of the resin. However, it is typically applied before or during impregnation as it can provide a non-stick surface upon which to apply the pressure required for causing the resin to impregnate the fibrous layer.

The resins used in all the resin impregnated layers of the composites of this invention such as the prepregs, the surface finishing film, the syntactic film and perhaps the support structure and surface venting structure, are preferably epoxy resins and they preferably have an Epoxy Equivalent Weight (EEW) in the range from 150 to 1500 preferably a high reactivity such as an EEW in the range of from 200 to 500 and the resin composition comprises the resin and an accelerator or curing agent. Suitable epoxy resins may comprise blends of two or more epoxy resins selected from monofunctional, difunctional, trifunctional and/or tetrafunctional epoxy resins. In a preferred embodiment the same epoxy resin is used in each of the layers.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X®, and as Erisys® GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Olin ® Epoxy) DEN439 (from Olin® Epoxy), Araldite® ECN 1273 (from Huntsman Advanced Materials), and Araldite® ECN 1299 (from Huntsman Advanced Materials).

The epoxy resin compositions used preferably also comprises one or more urea based curing agents and it is preferred to use from 0.5 to 10 wt % based on the weight of the epoxy resin of a curing agent, more preferably 1 to 8 wt %, more preferably 2 to 8 wt %. Preferred urea based materials are the range of materials available under the commercial name Urone®. In addition to a curing agent, a suitable accelerator such as a latent amine-based curing agent, such as dicyanopolyamide (DICY).

Preferably, the resin material has a storage modulus G' of from 1 x 10⁶ Pa to 1 x 10⁷ Pa, more preferably from 2 x 10⁶ Pa to 4 x 10⁶ Pa.

Preferably, the resin material has a loss modulus G" of from 5 x 10⁶ Pa to 1 x 10⁷ Pa, more preferably from 7 x 10⁶ Pa to 9 x 10⁶ Pa.

Preferably, the resin material has a complex viscosity of from 5 x 10⁵ Pa.s to 1 x 10 ⁷ Pa.s, more preferably from 7.5 x 10⁵ Pa.s to 5 x 10⁶ Pa.s, most preferably from 1 x 10⁶ Pa.s to 2 x 10⁶ Pa.s.

Preferably, the resin material has a viscosity 5 to 30 Pa.s at 80°C, more preferably from 10 to 25 Pa.s at 80°C.

Preferably, the resin material is an epoxy resin.

We have discovered that the aforesaid storage modulus and loss modulus properties allow the venting structure to remain in place during handling, storage and lay up of the moulding material or structure up to the start of processing when the laminate stack is heated up to temperatures over 40°C and a vacuum pressure is applied, even if multiple plies (stacks of 20, 30, 40, 60 or even more plies) are laid up.

Furthermore, as stated above, the viscosity of the resin in the moulding material, particularly in the surface finishing layer, is relatively high. This provides that prior to the curing stage, which is typically carried out an elevated temperature, for example at a temperature greater than 75°C, a typical curing temperature being 80°C or higher, the resin exhibits low or even negligible flow properties, which enhances the surface finish of the moulding. The resin material in the surface finishing layer preferably has a viscosity of from 5 to 30 Pa.s at 80°C, more preferably from 10 to 25 Pa.s at 80°C.

In this specification, the resin flow viscosity during the cure cycle was measured using a TA Instruments AR2000 rheometer with disposable 25mm diameter aluminium plates. The measurement was carried out with the following settings: increasing temperature from 30 to 130°C 2°C/mm with a shear stress of 3.259 Pa, gap: 1000 micrometer.

Furthermore, we have discovered that by using resin with the properties as defined herein, the moulding material of the invention is very stable during manufacture, storage, handling and lay-up so that the venting structure in the tows (and through embossing by a backing sheet) can remain in place up until an advanced stage during processing of the laminate stack when the temperature is raised typically to values above 60°C.

The fibrous material used in the various layers of the composite of this invention may be multifilament tows which may comprise cracked (i.e. stretch-broken), selectively discontinuous or continuous filaments. The filaments may be made from a wide variety of materials, such as carbon, basaltic fibre, graphite, glass, metalized polymers, aramid and mixtures thereof. Glass and carbon fibres tows are preferred carbon fibre tows, being preferred for wind turbine shells of length above 40 metres such as from 50 to 60 metres. The structural fibres are individual tows made up of a multiplicity of unidirectional individual fibres. Typically the fibres will have a circular or almost circular cross-section with a diameter for carbon in the range of from 3 to 20 µm, preferably from 5 to 12 µm. For other fibres, including glass, the diameter may be in the range of from 3 to 600 µm, preferably from 10 to 100 µm. Different tows may be used in different layers of the composite of the invention and different composites may be used together to produce a final cured laminate according to the properties required of the cured laminate.

The reinforcing fibres used in the layers of the composite of this invention may be synthetic or natural fibres or any other form of material or combination of materials that, combined with the resin composition of the invention, forms a composite product. The reinforcement web can either be provided via spools of fibre that are unwound or from a roll of textile. Exemplary fibres include glass, carbon, graphite, boron, ceramic and aramid. Preferred fibres are carbon and glass fibres. Hybrid or mixed fibre systems may also be envisaged. The use of cracked (i.e. stretch-broken) or selectively discontinuous fibres may be advantageous to facilitate lay-up of the product according to the invention and improve its capability of being shaped. Although a unidirectional fiber alignment is preferable, other forms may also be used. Typical textile forms include simple textile fabrics, knit fabrics, twill fabrics and satin weaves. It is also possible to envisage using non-woven or non-crimped fiber layers. The surface mass of fibres within the fibrous reinforcement is generally 80-4000 g/m², preferably 100-2500 g/m², and especially preferably 150-2000 g/m². The number of carbon filaments per tow can vary from 3000 to 320,000, again preferably from 6,000 to 160,000 and most preferably from 12,000 to 48,000. For fiberglass reinforcements, fibres of 600-2400 tex are particularly adapted.

Exemplary layers of unidirectional fibrous tows are made from HexTow® carbon fibres, which are available from Hexcel Corporation. Suitable HexTow® carbon fibres for use in making unidirectional fibre tows include: IM7 carbon fibres, which are available as tows that contain 6,000 or 12,000 filaments and weight 0.223 g/m and 0.446 g/m respectively; IM8-IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

The tows of the prepreg layers of the composite of this invention will be impregnated with the epoxy resin so that the resin is present between the tows. The impregnation may be controlled so that a first side of the layer of tows is wetted by the resin whereas the second side remains dry. Alternatively both sides can be wetted by resin providing the resin does not fill all the spaces between the individual filaments within the tows. It is preferred that the prepregs used in the present invention are predominantly composed of resin and the multifilament tows.

Epoxy resins can become brittle upon curing and toughening materials can be included with the resin to impart durability. Where the additional toughening material is a polymer it should be insoluble in the matrix epoxy resin at room temperature and at the elevated temperatures at which the resin is cured. Depending upon the melting point of the thermoplastic polymer, it may melt or soften to varying degrees during curing of the resin at elevated temperatures and re-solidify as the cured laminate is cooled. Suitable thermoplastics should not dissolve in the resin, and include thermoplastics, such as polyamides (PAS), polyethersulfone (PES) and polyetherimide (PEI). Polyamides such as nylon 6 (PA6) and nylon 12 (PA12) and mixtures thereof are preferred.

The composite of this invention may be rolled-up, so that it can be stored for a period of time. It can then be unrolled and cut as desired and optionally laid up with other prepregs to form a prepreg stack in a mould or in a vacuum bag which is subsequently placed in a mould and cured.

Once prepared, the composite or composite stack is cured by exposure to an elevated temperature, and optionally elevated pressure, to produce a cured laminate. As discussed above, the composite of the present invention can provide cured mouldings with excellent mechanical properties and surface finish without requiring the high pressures encountered in an autoclave process. The curing process may be carried out at a pressure of less than 2.0 bar absolute, preferably less than 1 bar absolute. In a particularly preferred embodiment the pressure is less than atmospheric pressure. The curing process may be carried out at one or more temperatures in the range of from 80 to 200°C, for a time sufficient to cure of the thermosetting resin composition to the desired degree.

Alternatively curing at a pressure close to atmospheric pressure can be achieved by the so-called vacuum bag technique or out of autoclave. This involves placing the composite or composite stack in an air-tight bag against a mould surface and creating a vacuum on the inside of the bag. This has the effect that the prepreg stack experiences a consolidation pressure of up to atmospheric pressure, depending on the degree of vacuum applied. This allows the resin from the surface finishing layer to flow through the perforated veil and form a removable bond with the surface of the mould.

Once cured, the moulding material becomes a laminate with a good surface finish, and we have found that a Class A surface finish suitable for use in a structural application, for example in an automotive or aerospace structure such as an external panel where appearance is important or in a wind turbine blade may be achieved.

Such laminates can comprise structural fibres at a level of from 45% to 75% by volume (fibre volume fraction), preferably from 55% to 70% by volume, more preferably from 58% to 65% by volume (DIN EN 2564 A).

The invention has applicability in the production of a wide variety of materials. An important use is in the production of automotive or aerospace panels. Another particular use is in the production of wind turbine blades and spars. Typical wind turbine blades comprise two long shells which come together to form the outer surface of the blade and a supporting spar within the blade and which extends at least partially along the length of the blade. The shells and the spar may be produced by curing the prepregs or stacks of prepregs of the present invention.

The reduction in the number of voids in the laminates is particularly useful in providing shells and/or spars and/or spar caps for wind turbine blades having uniform mechanical properties. Particularly spars and parts thereof that are subjected to high loads. Any reduction in void content greatly improves the mechanical performance of these parts. This in turn allows the parts to be built at a reduced weight (for example by reducing the number of prepreg layers) in comparison to a similar part which would have a higher void content. Furthermore, in order to withstand the conditions to which wind turbine structures are subjected during use it is desirable that the cured prepregs from which the shells and spars are made have a high Tg and preferably a Tg greater than 90°C.

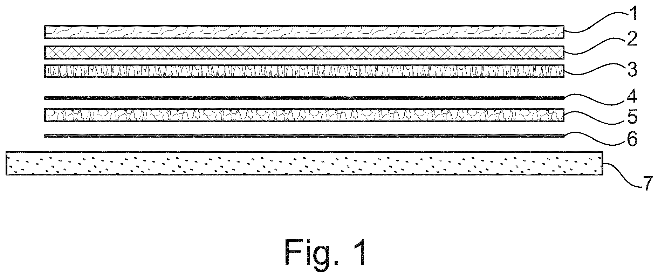

The invention is illustrated by reference to the accompanying drawing of Figure 1 and the following Examples.

Figure 1 presents a diagrammatic view of a multilayer material. This material was prepared in which layer (1) is a first prepreg layer, layer (2) is a syntactic film comprising a resin containing micro balloons, layer (3) is a second prepreg layer, layer (4) is a support structure comprising a TFP 20gsm carbon fibre veil (Comparative Examples 1 and 2) or a S5030 glass fibre veil (Comparative Examples 3 to 5 and Example 6), layer (5) is a surface finishing film and layer (6) is a surface venting structure comprising a Trinitex veil. Layer 7 represents a mould surface.

The surface finishing film, the syntactic film and both prepregs all contain epoxy resin matrices, and the surface finishing film also contains 21% solid glass microspheres by weight, the syntactic film also contains 21% glass balloons based on the weight of the film, and the prepreg matrices also contain 70% by weight of carbon fibre based on the overall weight of the prepreg.

The thickness of the layers was as follows:
Surface finishing film @ 500 gsm = 370 microns
Syntactic film @ 500 gsm = 600 microns

The surface venting structure is a veil (Trinitex® K914 from Ahlstrom) with and without perforations provided therein.

The epoxy resin matrices used in these various layers were as follows (Epikote, Spheriglass, URONE, Dyhard and DICY are registered trademarks).

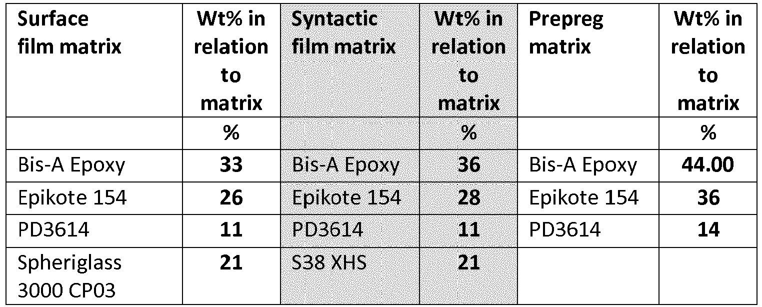

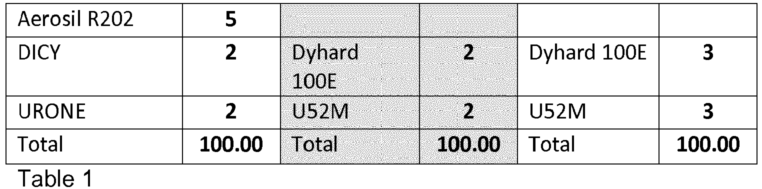

The materials are as follows:
Bis-A Epoxy - Difunctional liquid bisphenol A resin of epoxy equivalent weight of 330.
Epikote® 154 (Momentive) - Polyfunctional epoxy phenol novolac resin PD3614 (Struktol) - Nitrile rubber modified epoxy prepolymer (adduct) based on Bisphenol-A-diglycidyl ether (DGEBA)
DICY® (Alzchem) - Dicyandiamide micronized hardener/curing agent
URONE® (Emerald) - Cure accelerator 4,4 Methylene bis (phenyl dimethyl urea)

The Additives used in the matrices were as follows:
Aerosil® R202 (Momentive) - Fumed silica after treated with a polydimethylsiloxane Spheriglass®
CP03 (Potter) - Solid glass microspheres, improved mechanical properties
S38 XHS (3M) - Glass bubbles, for low cost, low density filler

The layers were laid up as shown in Figure 1 and the composite placed in a mould where it was heated to 130°C for 30 minutes under a pressure of 1 bar. The mould was allowed to cool and when the cured moulding was removed from the mould the surface at the surface venting structure was inspected.

### Comparative Example 1

Materials corresponding generally to the multilayer material of figure 1 were produced, either without the presence of the surface venting veil, or with an unimpregnated or fully impregnated non-perforated veil. The support structure was a TFP 20gsm carbon fibre veil. The surface finish without a surface veil was poor. If the surface veil was fully impregnated or not impregnated at all the surface finish was also poor.

### Comparative Example 2

Comparative Example 1 was repeated except that the veil was impregnated with various patterns of resin. The surface quality was poor with many pin holes.

### Comparative Example 3

Comparative Example 1 was repeated, except that the support structure was changed to a S5030 glass fibre veil and an uncatalysed resin was applied as dots to the surface of the veil and compared with a veil without dots. In both instances the surface finish was poor.

### Comparative Example 4

Comparative Example 3 was repeated except that a resin dissolved in methyl ketone was sprayed into the surface of the veil. The surface finish was very poor.

### Comparative Example 5

Comparative Example 3 was repeated except that a spray mount was applied to the surface of the mould or the veil. The surface finish was very poor in both cases.

### Example 6

Amoulding material corresponding generally to the multilayer material of Figure 1 was produced, except that holes were punched in the surface venting structure (Trinitex® K914 veil) before it was applied to the surface finish film.

The following hole patterns were used.
i) 3 mm diameter holes space 20 mm apart
ii) 3 mm diameter holes spaced 35 mm apart
iii) 2 mm diameter holes spaced 20 mm apart
iv) 2 mm diameter holes spaced 35 mm apart
v) 4.5 mm diameter holes space 35 mm apart
vi) 6 mm diameter holes spaced 35 mm apart.

Good surface finish was obtained with all these patterns. The larger diameter holes were found to provide somewhat better removable adhesion to the mould surface.

## Claims

1. A moulding material comprising a layer of a fibrous material in a curable resin matrix (3) provided on at least one surface with a surface finishing film (5) comprising tacky resin wherein a veil (6) is provided on the surface of the finishing film remote from the moulding material **characterized in that** perforations are formed in the veil (6) to allow passage of the tacky resin of the surface finishing film (5) through the veil (6) during a moulding operation.

2. A moulding material according to claim 1 in which the surface finishing film (5) comprises a particulate filler.

3. A moulding material according to Claim 1 or claim 2 wherein the fibrous material in a curable resin is a prepreg (3) and is provided with a support structure (4) on at least one surface thereof and the surface finishing film (5) is provided on the surface of the support structure remote or spaced from the prepreg and the veil (6) provides a surface venting structure on the surface of the finishing film remote or spaced from the support structure.

4. A moulding material according to claim 3 in which the layer of a fibrous material in a curable resin matrix (3) is coupled with a syntactic film (2) on the side of the prepreg (3) remote or spaced from the support structure; optionally in which a further prepreg layer (1) is provided against the back of the syntactic film (2).

5. A moulding material according to Claim 3 or Claim 4 in which the support structure is a fibrous material that is not impregnated with resin or in which the support structure is a fibrous material that is partially impregnated with resin.

6. A moulding material according to any of the preceding claims in which the surface finishing film (5) is fibre reinforced.

7. A moulding material according to any of the preceding claims in which the perforations in the veil (6) are of average diameter from 1 mm to 10 mm, preferably from 2 mm to 6 mm, with a spacing of from 1 mm to 50 mm, preferably from 20 mm to 35 mm.

8. A moulding material according to claim 4 in which the thickness ratio of the surface finishing film (5) in relation to the syntactic film (2) is less than 1:2 and greater than 1:6.

9. A stack of the moulding materials according to any of the preceding claims.

10. A cured moulding comprising a multilayer material composite comprising a layer of fibrous material (3) in a cured resin matrix, **characterised in that** said layer is attached on one surface to the first surface of a support structure (4) which in turn is attached at its second surface to the first surface of a finishing film (5) which is attached at its second surface to a surface of a perforated veil (6).

11. The cured moulding according to Claim 10 comprising a plurality of layers of the cured multilayer material.

12. A cured moulding according to Claim 10 or Claim 11 comprising an automobile component, an aerospace component or a wind turbine component, such as a part of a blade of a wind turbine.

13. A cured moulding according to any of claims 10 to 12 in which the perforations in the veil (6) are of average diameter from 1 mm to 10 mm, preferably from 2 mm to 6 mm, with a spacing of from 1 mm to 50 mm, preferably from 20 mm to 35 mm.

14. The use of a veil (6) as the surface layer of a moulding material comprising fibrous reinforcement in a matrix of a tacky resin, **characterized in that** the veil is formed with perforations to allow passage of the tacky resin through the veil (6) to adhere to the mould surface during a moulding operation; optionally wherein the perforations in the veil (6) are of average diameter from 1 mm to 10 mm, preferably from 2 mm to 6 mm, with a spacing of from 1 mm to 50 mm, preferably from 20 mm to 35 mm.

15. A moulding process comprising placing a moulding material according to any of Claims 1 to 10 in a mould wherein pressure is exerted within the mould whereby the resin from the surface finishing film (5) passes through the veil (6) into contact with the mould surface, and remains in contact with the mould surface during the moulding process; optionally in which the resin is curable by heat and the mould is heated to cure the resin.

## Patentansprüche

1. Formmaterial, umfassend eine Schicht aus einem Fasermaterial in einer härtbaren Harzmatrix (3), die auf mindestens einer Oberfläche mit einem Oberflächenveredelungsfilm (5) bereitgestellt ist, der ein klebriges Harz umfasst, wobei ein Schleier (6) auf der Oberfläche des Veredelungsfilms entfernt von dem Formmaterial vorgesehen ist, **dadurch gekennzeichnet, dass** im Schleier (6) Perforationen gebildet werden, um während eines Formvorgangs den Durchgang des klebrigen Harzes des Oberflächenveredelungsfilms (5) durch den Schleier (6) zu ermöglichen.

2. Formmaterial nach Anspruch 1, bei dem der Oberflächenveredelungsfilm (5) einen teilchenförmigen Füllstoff umfasst.

3. Formmaterial nach Anspruch 1 oder Anspruch 2, wobei das Fasermaterial in einem härtbaren Harz ein Prepreg (3) ist und auf mindestens einer Oberfläche davon mit einer Trägerstruktur (4) versehen ist und der Oberflächenveredelungsfilm (5) auf der Oberfläche der Trägerstruktur entfernt oder beabstandet von dem Prepreg vorgesehen ist und der Schleier (6) eine Oberflächenlüftungsstruktur auf der Oberfläche des Veredelungsfilms entfernt oder beabstandet von der Trägerstruktur bereitstellt.

4. Formmaterial nach Anspruch 3, bei dem die Schicht eines Fasermaterials in einer härtbaren Harzmatrix (3) mit einem syntaktischen Film (2) auf der Seite des Prepregs (3) entfernt oder beabstandet von der Trägerstruktur gekoppelt ist; bei dem gegebenenfalls eine weitere Prepreg-Schicht (1) an der Rückseite des syntaktischen Films (2) vorgesehen ist.

5. Formmaterial nach Anspruch 3 oder Anspruch 4, bei dem die Trägerstruktur ein Fasermaterial ist, das nicht mit Harz imprägniert ist, oder bei dem die Trägerstruktur ein Fasermaterial ist, das teilweise mit Harz imprägniert ist.

6. Formmaterial nach einem der vorhergehenden Ansprüche, bei dem der Oberflächenveredelungsfilm (5) faserverstärkt ist.

7. Formmaterial nach einem der vorhergehenden Ansprüche, bei dem die Perforationen in dem Schleier (6) einen durchschnittlichen Durchmesser von 1 mm bis 10 mm, vorzugsweise von 2 mm bis 6 mm, mit einem Abstand von 1 mm bis 50 mm, vorzugsweise von 20 mm bis 35 mm aufweisen.

8. Formmaterial nach Anspruch 4, bei dem das Dickenverhältnis des Oberflächenveredelungsfilms (5) in Bezug auf den syntaktischen Film (2) kleiner als 1:2 und größer als 1:6 ist.

9. Stapel der Formmaterialien nach einem der vorhergehenden Ansprüche.

10. Ausgehärtetes Formteil, umfassend einen mehrschichtigen Materialverbundstoff, umfassend eine Schicht aus Fasermaterial (3) in einer gehärteten Harzmatrix, **dadurch gekennzeichnet, dass** die Schicht auf einer Oberfläche an der ersten Oberfläche einer Trägerstruktur (4) angebracht ist, die wiederum an ihrer zweiten Oberfläche an der ersten Oberfläche eines Veredelungsfilms (5) angebracht ist, der an seiner zweiten Oberfläche an einer Oberfläche eines perforierten Schleiers (6) angebracht ist.

11. Ausgehärtetes Formteil nach Anspruch 10, umfassend eine Vielzahl von Schichten des ausgehärteten mehrschichtigen Materials.

12. Ausgehärtetes Formteil nach Anspruch 10 oder Anspruch 11, umfassend eine Automobilkomponente, eine Luft- und Raumfahrtkomponente oder eine Windkraftanlagenkomponente, wie beispielsweise ein Teil eines Blatts einer Windkraftanlage.

13. Ausgehärtetes Formteil nach einem der Ansprüche 10 bis 12, bei dem die Perforationen im Schleier (6) einen durchschnittlichen Durchmesser von 1 mm bis 10 mm, vorzugsweise von 2 mm bis 6 mm, mit einem Abstand von 1 mm bis 50 mm, vorzugsweise von 20 mm bis 35 mm aufweisen.

14. Verwendung eines Schleiers (6) als Oberflächenschicht eines Formmaterials, das eine Faserverstärkung in einer Matrix aus einem klebrigen Harz umfasst, **dadurch gekennzeichnet, dass** der Schleier mit Perforationen ausgebildet ist, um den Durchgang des klebrigen Harzes durch den Schleier (6) zu ermöglichen, damit es während eines Formvorgangs an der Formoberfläche haften kann; wobei die Perforationen im Schleier (6) gegebenenfalls einen durchschnittlichen Durchmesser von 1 mm bis 10 mm, vorzugsweise von 2 mm bis 6 mm, mit einem Abstand von 1 mm bis 50 mm, vorzugsweise von 20 mm bis 35 mm aufweisen.

15. Formverfahren, umfassend das Platzieren eines Formmaterials nach einem der Ansprüche 1 bis 10 in einer Form, wobei innerhalb der Form Druck ausgeübt wird, wodurch das Harz von dem Oberflächenveredelungsfilm (5) durch den Schleier (6) in Kontakt mit der Formoberfläche hindurchgeht und während des Formverfahrens mit der Formoberfläche in Kontakt bleibt; bei dem gegebenenfalls das Harz durch Wärme härtbar ist und die Form erhitzt wird, um das Harz zu härten.

## Revendications

1. Matériau de moulage comprenant une couche d'un matériau fibreux dans une matrice de résine durcissable (3) pourvue sur au moins une surface d'un film de finition de surface (5) comprenant une résine collante dans lequel un voile (6) est prévu sur la surface du film de finition à distance du matériau de moulage **caractérisé en ce que** des perforations sont formées dans le voile (6) pour permettre le passage de la résine collante du film de finition de surface (5) à travers le voile (6) pendant une opération de moulage.

2. Matériau de moulage selon la revendication 1, dans lequel le film de finition de surface (5) comprend une charge particulaire.

3. Matériau de moulage selon la revendication 1 ou la revendication 2, dans lequel le matériau fibreux dans une résine durcissable est un préimprégné (3) et est pourvu d'une structure de support (4) sur au moins l'une de ses surfaces et le film de finition de surface (5) est prévu sur la surface de la structure de support à distance ou espacée du préimprégné et le voile (6) fournit une structure d'aération de surface sur la surface du film de finition à distance ou espacée de la structure de support.

4. Matériau de moulage selon la revendication 3, dans lequel la couche d'un matériau fibreux dans une matrice de résine durcissable (3) est couplée à un film syntactique (2) sur la face du préimprégné (3) à distance ou espacée de la structure de support ; éventuellement dans lequel une autre couche de préimprégné (1) est prévue contre le dos du film syntactique (2).

5. Matériau de moulage selon la revendication 3 ou la revendication 4, dans lequel la structure de support est un matériau fibreux qui n'est pas imprégné de résine ou dans lequel la structure de support est un matériau fibreux qui est partiellement imprégné de résine.

6. Matériau de moulage selon l'une quelconque des revendications précédentes, dans lequel le film de finition de surface (5) est renforcé de fibres.

7. Matériau de moulage selon l'une quelconque des revendications précédentes, dans lequel les perforations dans le voile (6) ont un diamètre moyen de 1 mm à 10 mm, de préférence de 2 mm à 6 mm, avec un espacement de 1 mm à 50 mm, de préférence de 20 mm à 35 mm.

8. Matériau de moulage selon la revendication 4, dans lequel le rapport d'épaisseur du film de finition de surface (5) par rapport au film syntactique (2) est inférieur à 1:2 et supérieur à 1:6.

9. Empilement de matériaux de moulage selon l'une quelconque des revendications précédentes.

10. Moulage durci comprenant un matériau composite multicouches comprenant une couche de matériau fibreux (3) dans une matrice de résine durcie, **caractérisé en ce que** ladite couche est attachée sur une surface à la première surface d'une structure de support (4) qui est à son tour attachée au niveau de sa deuxième surface à la première surface d'un film de finition (5) qui est attaché au niveau de sa deuxième surface à une surface d'un voile perforé (6).

11. Moulage durci selon la revendication 10, comprenant une pluralité de couches du matériau multicouches durci.

12. Moulage durci selon la revendication 10 ou la revendication 11, comprenant un composant automobile, un composant aérospatial ou un composant d'éolienne, tel qu'une partie d'une pale d'une éolienne.

13. Moulage durci selon l'une quelconque des revendications 10 à 12, dans lequel les perforations dans le voile (6) ont un diamètre moyen de 1 mm à 10 mm, de préférence de 2 mm à 6 mm, avec un espacement de 1 mm à 50 mm, de préférence de 20 mm à 35 mm.

14. Utilisation d'un voile (6) en tant que couche de surface d'un matériau de moulage comprenant un renfort fibreux dans une matrice d'une résine collante, **caractérisée en ce que** le voile est formé avec des perforations pour permettre le passage de la résine collante à travers le voile (6) pour adhérer à la surface du moule pendant une opération de moulage ; éventuellement dans laquelle les perforations du voile (6) ont un diamètre moyen de 1 mm à 10 mm, de préférence de 2 mm à 6 mm, avec un espacement de 1 mm à 50 mm, de préférence de 20 mm à 35 mm.

15. Procédé de moulage comprenant le positionnement d'un matériau de moulage selon l'une quelconque des revendications 1 à 10 dans un moule dans lequel une pression est exercée à l'intérieur du moule moyennant quoi la résine provenant du film de finition de surface (5) passe à travers le voile (6) en contact avec la surface du moule, et reste en contact avec la surface du moule pendant le processus de moulage ; éventuellement dans lequel la résine est durcissable par la chaleur et le moule est chauffé pour durcir la résine.
